(19) Europäisches Patentamt
European Patent Office
Office européen des brevets

(11) EP 4 528 967 A1

(12) EUROPEAN PATENT APPLICATION

(43) Date of publication:
26.03.2025 Bulletin 2025/13

(51) International Patent Classification (IPC):
H02J 3/38 (2006.01)        H02J 3/40 (2006.01)

(21) Application number: 24200794.6

(52) Cooperative Patent Classification (CPC):
H02J 3/388; H02J 3/381; H02J 3/40

(22) Date of filing: 17.09.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 19.09.2023 GB 202314290

(71) Applicant: Smart Power Networks Ltd
London W14 9BN (GB)

(72) Inventors:
• Rousis, Anastasios
  W14 9BN London (GB)
• Tzelepis, Dimitrios
  W14 9BN London (GB)
• Patsidis, Angelos
  W14 9BN London (GB)

(74) Representative: Basck Limited
9 Hills Road
Cambridge CB2 1GE (GB)

(54) SYSTEMS AND METHODS FOR SYNCHRONISING ISLANDED POWER GRIDS WITH A MAIN POWER GRID

(57) Disclosed is a system for synchronising islanded power grid (IPG) with main power grid (MPG), the system comprising: first phasor measurement unit(s) (PMU(s)) that collects first phasor data associated with MPG; second PMU(s) that collect second phasor data associated with IPG; main controller of IPG that is communicably coupled to first PMU(s) and second PMU(s). The main controller is configured to: receive first and second phasor data; receive command from device; execute frequency correction process iteratively using first and second phasor data, to match frequency of IPG to frequency of MPG; execute phase and voltage magnitude correction process iteratively using first and second phasor data, to match phase and voltage magnitude of IPG at connection point to phase and voltage magnitude of MPG; and send activation signal to electrical element(s) arranged at connection point to establish electrical connection between IPG and MPG upon receiving activation signal.

FIG. 3

EP 4 528 967 A1

**Description**

TECHNICAL FIELD

The present disclosure relates to systems for synchronising islanded power grids with a main power grid. The present disclosure also relates to methods for synchronising islanded power grid with main power grid.

BACKGROUND

In recent times, energy demand has exponentially increased due to advancements in industrialization, which is driven by a global population and economic growth. With such increasing energy demand, it is difficult to meet energy requirements of an area with existing infrastructure of a main power grid. Furthermore, in instances when over-loading occurs, the main power grid is not able to supply electricity for consumption to local users of the area. Hence, an islanded power grid is used in the area for production, distribution, and consumption of electricity, thereby beneficially decreasing over-loading of the main power grid. This creates energy independence within the area, as the islanded power grid can use renewable energy sources to generate electricity for consumption by the local users. The local electric grid is electrically disconnected and its electrical parameters are not synchronized, to other local electric grids and/or the main power grid. However, in certain cases, re-connection of islanded power grids back to the main power grid (or to other islanded power grids) is required in order to facilitate numerous benefits, including increased reliability and stability, improved cost-effectiveness, enhanced energy security and flexibility, opportunities for renewable energy integration, and access to grid services and support. The electrical re-connection requires synchronization of their electric parameters.

Despite recent progress in synchronization of the islanded power grid with another electric grid (i.e., the other islanded power grid, such as an islanded (micro) power grid, and/or the main power grid), existing techniques and equipment for synchronization have several limitations associated therewith. Existing techniques and equipment take into account measurements of electrical parameters from different points between the islanded power grid and another electric grid, to ensure accurate alignment of the electrical parameters of the islanded power grid with another electric grid. Inaccurate alignment imposes a risk on the islanded power grid including damage to loads connected to said electric grid, maloperation of protection and control system, and similar. The accurate alignment of electrical parameters is ensured using devices, such as synchronization check relays, which locally monitor the electrical parameters, such as voltage. However, such devices can only monitor the electrical parameters, and has no capability of controlling the circuit breakers between the islanded power grid and the another electric grid. Such devices can only initiate a single binary command for closing of the circuit breakers for electrically coupling the islanded power grid with the another electric grid. Furthermore, such devices can be used only when the islanded power grid is integrated with a single generator.

Additionally, filter-based methodologies (such as Kalman and Low-Pass Notch filters) are used for synchronizing the islanded power grid with the another given electric grid. However, robust performance is not achieved as those methods are sensitive to unbalanced grid operating conditions and harmonics. Moreover, active synchronization methods employing gradient-descent-based and constrained optimal power flow algorithms are used for active distribution networks. However, said methods can be implemented only when the three-phase system is balanced, while they have no capabilities to manage dynamic changes.

Conventionally, grid-forming converters are used to directly control frequency, voltage, and angle at their output, but synchronizing multi-asset power islands still presents unresolved challenges. A first challenge being limited real-time visibility, as said real-time visibility of both sides of the synchronization points is a requirement for seamless synchronization. A second challenge being stability of the islanded power grids, as grid-forming assets may introduce abnormal operating conditions during the synchronization process, which potentially leads to collapse of the islanded power grids. A third challenge being non-homogenous nature of control characteristics of converters, as different converters may have conflicting responses to control commands. A fourth challenge being disconnection of uncontrolled islanded power grid which receives energy from renewable energy sources, which is risky during synchronization due to abnormal conditions.

Therefore, in light of the foregoing discussion, there exists a need to overcome the aforementioned drawbacks associated with existing techniques and equipment for synchronization of the islanded power grid with another electric grid.

SUMMARY

The present disclosure seeks to provide a system for synchronising an islanded power grid with main power grid. The present disclosure also seeks to provide a method for synchronising an islanded power grid with a main power grid. An aim of the present disclosure is to provide a solution that overcomes at least partially the problems encountered in prior art.

In a first aspect, an embodiment of the present disclosure provides a system for synchronising an islanded power grid with a main power grid, the system comprising:

- at least one first phasor measurement unit (PMU) that in use, collects first phasor data associated with the main power grid, wherein the first phasor data comprises time-stamped voltage phasors and frequency values at an electrical node within main power grid close to a connection point;
- a plurality of second PMUs that in use, collect second phasor data associated with the islanded power grid, wherein the second phasor data comprises time-stamped voltage phasors and frequency values at a plurality of electric nodes which at least include a plurality of energy sources in the islanded power grid;
- a main controller of the islanded power grid that is communicably coupled to the at least one first PMU and at least one of the plurality of second PMUs, the main controller being configured to:

  - receive the first phasor data and the second phasor data;
  - receive a command from a device associated with an operator of the system; and then
  - execute a frequency correction process iteratively using the first phasor data and the second phasor data, to match a frequency of the islanded power grid to a frequency of the main power grid;
  - execute a phase and voltage magnitude correction process iteratively using the first phasor data and the second phasor data, to match a phase and voltage magnitude of the islanded power grid at the connection point to a phase and voltage magnitude of the main power grid; and
  - send an activation signal to at least an electrical element arranged at the connection point, causing the electrical element to establish an electrical connection between the islanded power grid and the main power grid upon receiving the activation signal.

In a second aspect, an embodiment of the present disclosure provides a method for synchronising an islanded power grid with a main power grid, the method comprising:

- receiving a first phasor data from at least one phase measurement unit (PMU) and a second phasor data from a plurality of second PMUs, wherein the first phasor data comprises time-stamped voltage phasors and frequency values at an electrical node within main power grid close to a connection point, and the second phasor data comprises time-stamped voltage phasors and frequency values at a plurality of electric nodes which at least include a plurality of energy sources in the islanded power grid;
- receiving a command from a device associated with an operator of the system; and then
- executing a frequency correction process iteratively using the first phasor data and the second phasor data, for matching a frequency of the islanded power grid to a frequency of the main power grid;
- executing a phase and voltage magnitude correction process iteratively using the first phasor data and the second phasor data, for matching a phase and voltage magnitude of the islanded power grid to a phase and voltage magnitude of the main power grid; and
- sending an activation signal to at least an electrical element arranged at the connection point, causing the electrical element to establish an electrical connection between the islanded power grid and the main power grid upon receiving the activation signal.

Embodiments of the present disclosure substantially eliminate or at least partially address the aforementioned problems in the prior art, and enable synchronisation of a plurality of energy sources in the islanded power grid with the main power grid.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:

FIGs. 1A and 1B illustrate block diagrams of example architectures of a system for synchronising an islanded power grid with a main power grid, in accordance with an embodiment of the present disclosure;

FIG. 2 illustrates a block diagram of an exemplary phasor measurement unit (PMU), in accordance with an embodiment of the present disclosure;

FIG. 3 illustrates an exemplary system for synchronising an islanded power grid with a main power grid, in accordance with an embodiment of the present disclosure; and

FIG. 4 illustrates a flowchart depicting steps of a method for synchronising an islanded power grid with a main power grid, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, an embodiment of the present disclosure provides a system for synchronising an islanded power grid with a main power grid, the system comprising:

- at least one first phasor measurement unit (PMU) that in use, collects first phasor data associated with the main power grid, wherein the first phasor data comprises time-stamped voltage phasors and frequency values at an electrical node within main power grid close to a connection point,
- a plurality of second PMUs that in use, collect second phasor data associated with the islanded power grid, wherein the second phasor data comprises time-stamped voltage phasors and frequency values at a plurality of electric nodes which at least include a plurality of energy sources in the islanded power grid;
- a main controller of the islanded power grid that is communicably coupled to the at least one first PMU and at least one of the plurality of second PMUs, the main controller being configured to:
- receive the first phasor data and the second phasor data;
- receive a command from a device associated with an operator of the system, wherein upon receiving said command, the main controller proceeds to a frequency correction process;
- execute the frequency correction process iteratively using the first phasor data and the second phasor data, to match a frequency of the islanded power grid to a frequency of the main power grid;
- execute a phase and voltage magnitude correction process iteratively using the first phasor data and the second phasor data, to match a phase and voltage magnitude of the islanded power grid to a phase and voltage magnitude of the main power grid; and
- send an activation signal to at least an electrical element arranged at the connection point, causing the electrical element to establish an electrical connection between the islanded power grid and the main power grid upon receiving the activation signal.

In a second aspect, an embodiment of the present disclosure provides a method for synchronising an islanded power grid with a main power grid, the method comprising:

- receiving a first phasor data from at least one phase measurement unit (PMU) and a second phasor data from a plurality of second PMUs, wherein the first phasor data comprises time-stamped voltage phasors and frequency values at an electrical node within main power grid close to a connection point, and the second phasor data comprises time-stamped voltage phasors and frequency values at a plurality of electric nodes which at least include a plurality of energy sources in the islanded power grid;
- receiving a command from a device associated with an operator of the system, wherein upon receiving said command, the main controller proceeds to the frequency correction process;
- executing a frequency correction process iteratively using the first phasor data and the second phasor data, for matching a frequency of the islanded power grid to a frequency of the main power grid;
- executing a phase and voltage magnitude correction process iteratively using the first phasor data and the second phasor data, for matching a phase and voltage magnitude of the islanded power grid to a phase and voltage magnitude of the main power grid; and
- sending an activation signal to at least an electrical element arranged at the connection point, causing the electrical element to establish an electrical connection between the islanded power grid and the main power grid upon receiving the activation signal.

The present disclosure provides the aforementioned system and the aforementioned method for synchronising the islanded power grid with the main power grid. The aforementioned system incorporates mathematical computations for the fast, accurate, reliable, smooth and stable synchronisation of the islanded power grid with the main power grid. Beneficially, the plurality of energy sources in the islanded power grid can synchronise with the main power grid, thereby facilitating an increased penetration of distributed energy sources in mainstream production of energy. Additionally, the aforementioned system enables an increased security of electricity supply across all sizes of the islanded power grid and the main power grid at all times. Beneficially, reinforcements required for the islanded power grid and the main power grid are reduced which enhances a stability and health status of the islanded power grid and the main power grid. Advantageously, there is increased utilization of the plurality of energy sources, thereby contributing to a reduced carbon dioxide emission.

Throughout the present disclosure, the term *"main power grid"* refers to a large-scale interconnected power system that is configured for centralized power generation and transmission. The main power grid is configured to serve a vast area, such as, for example, at least one of: a region, a state, a country. Throughout the present disclosure, the term *"power grid"* refers to a small-scale power system that operates independently (in other words, disconnected from the main power grid) to reduce a dependence on the main power grid, or can operate in parallel with the main power grid to share any excess energy with the main power grid or draw energy from the main power grid, if required. The islanded power grid typically comprises distributed energy resources(s), wherein the comprises distributed energy resource(s) is at least one of: a renewable energy source, a non-renewable energy source. Examples of the renewable energy source may include, but are not limited to, a solar energy source, a wind energy source, a geothermal energy source. Examples of the non-renewable energy source may include, but are not limited to, a thermal energy source, oil, gas. The islanded power grid is configured to serve a particular location or a plurality of premises, wherein the term *"plurality of premises"* refers to at least one of: a plurality of houses, a plurality of buildings, together with a portion of land and outbuildings surrounding at least one of: the plurality of houses, the plurality of buildings. Examples of the premises may include, but are not limited to, a house (for example, such as a bungalow, a villa, an apartment, and the like), a housing complex (for example, a multi-storey structure having multiple apartments), a hotel, a hospital, an office premises, a commercial establishment (for example, such as a shop, a shopping mall, an office premises, and the like), an industrial building (for example, such as a workshop, factory).

It will be appreciated that the electrical connection of the islanded power grid with the main power grid is achieved by initially synchronizing the islanded power grid and the main power grid at the connection point. Herein, the term *"synchronisation"* refers to a process of matching a frequency, a phase and voltage magnitudes between the islanded power grid and the main power grid.

Throughout the present disclosure, the term *"phasor measurement unit"* refers to a device that is used to measure and record a magnitude and phase angle of an electrical waveform (i.e., a voltage waveform and/or a current waveform) in a particular point in at least one of: the main power grid, the islanded power grid, in real time or near-real time. Upon measuring the electrical waveform at a high sampling rate (wherein the high sampling rate typically lies in a range of 30 to 120 samples per second), a PMU-based controller of the PMU records the phasor data at the particular point in a specific time instant, wherein the phasor data comprises at least one phasor. The *"phasor"* is a complex number that represents an amplitude and phase angle of the electrical waveform at a specific time instant. The phasor data is collected over a period of time, wherein the period of time may be a second, a minute, an hour, 2 hours, 4 hours, 12 hours, 24 hours (a day), a week, and similar. The PMU uses at least one of: a Global Positioning System (GPS) reference source, a calibrated non-GPS reference source, to synchronize the phasor data with a common time reference and produce the time-stamped voltage phasor. Herein, the *"time-stamped voltage phasor"* is a measurement of the amplitude and the phase angle of the electrical waveform taken at the specific time instant and synchronised with a common time reference (as will be described later). The PMU detects fluctuations in the electrical waveform and records the fluctuations in the form of frequency values, wherein the frequency values are used to maintain a frequency stability of the islanded power grid. Additionally, the phasor data could also comprise phase-slip, time stamped current phasors, active power, reactive power. The phasor data can be stored in a data repository in a given format (for example, such as a text file including values of the phasor data over a period of time).

The at least one first PMU is electrically connected at an electrical node within main power grid close to the connection point. Herein, the term *"connection point"* refers to a point of common coupling where the islanded power grid is connected to the main power grid through the electrical element (as will be described later). The at least one first PMU collects the first phasor data from the main power grid when in use, in real time or near-real time. The first phasor data is used as a reference for the second phasor data. The islanded power grid comprises the plurality of energy sources, hence the plurality of PMUs are installed at a plurality of electric nodes which at least include a plurality of energy sources. The plurality of energy sources comprise at least one of: a hydropower energy source, a thermal energy source, a solar photovoltaic energy source, a wind energy source. Hence, the second phasor data comprises measurements from the plurality of energy sources comprised in the islanded power grid. Optionally, each PMU from amongst the plurality of second PMUs are connected to each of the plurality of energy resources which is used to control the magnitude, frequency and phase angle of a voltage phasor or a current phasor.

Optionally, the frequency values in the second phasor data are same as or different from the frequency values in the first phasor data. In this regard, the time-stamped voltage phasors in the second phasor data are same as or different from the time-stamped voltage phasors in the first phasor data.

Throughout the present disclosure, the term *"controller"* refers to a computational device that is operable to respond to information, to process information, and to perform actions based on said processing. The controller may be implemented as hardware, software, firmware, or a combination of these. In an example, the controller may be an embedded microcontroller, a microprocessor, a processor of a computer or a portable computing device, or similar. The controller can be coupled in a wired, or a wireless manner. In an instance, the controller is coupled in a wired manner using at least one of: an Ethernet, a Local Area Network (LAN), a twisted pair cable, a coaxial cable, and a optical fibre cable. In another instance, the controller is coupled in a wireless manner using at least one of: Wi-Fi®, a Bluetooth®, Internet.

The main controller of the islanded power grid is a central processing unit (CPU)-based programmable controller with, optionally, a field-programmable gate arrays (FPGA) as a central infrastructure. The main controller is communicably coupled to the at least one PMU and the plurality of second PMUs. However, when in use, the main controller needs access to the at least one of the plurality of second PMUs. This at least one of the plurality of second PMUs is connected in at least one electrical node from the plurality of electrical nodes between at least one electrical source from the plurality of electrical sources and the connection point, that is to be synchronised with the main power grid.

The first phasor data and the second phasor data are received by the main controller in real time from the at least one PMU and at least one of the second PMUs. The first phasor data and the second phasor data are received and aligned chronologically, thereby enabling the main controller in making prompt and time-synchronised deductions regarding a synchronisation of the islanded power grid with the main power grid.

Throughout the present disclosure, the term *"device"* refers to a communication device which is accessible by the operator of the system. Optionally, the operator is the entity who initiates synchronisation of the islanded power grid with the main power grid by providing a command to the main controller. The operator is any one of: a manual operator, an automated operator, a scheduled operator. Optionally, the device is a cloud server. The device can receive a command using at least one of: a Supervisory Control and Data Acquisition (SCADA) system, an energy management system (EMS), a radio, a phone, a laptop, a computer, a tablet, a phablet, a pager, a smartphone, a smartwatch, a smart device. For example, the communication may be an email notification or an alert by a virtual assistant. A technical effect of providing the command is that it allows the main controller to commence synchronisation of the islanded power grid with the main power grid, resulting in an accurate performance by the system. The command may be provided to the device in real time. Upon receiving such command, the main controller proceeds to the frequency correction process, and then the synchronisation of the islanded power grid with the main power grid may be initiated.

The frequency correction process is executed to initiate a process of stabilising the frequency of the islanded power grid according to the frequency of the main power grid, for synchronising the islanded power grid to the main power grid, by using the frequency values in the first phasor data as reference frequency values. The frequency correction process is performed in an iterative manner, i.e., in a repetitive sequence of steps until the frequency of the islanded power grid matches with the frequency of the main power grid. A technical effect of executing the frequency correction process iteratively is that the frequency values of the islanded power grid is modified or adjusted repeatedly to approach the frequency of the main power grid in a step-by-step manner.

Optionally, when executing the frequency correction process iteratively, at each iteration, the main controller is configured to:

- determine a first average value of the frequency values in the first phasor data;
- determine a second average value of the frequency values in the second phasor data;
- determine whether a difference between the first average value and the second average value is greater than or equal to a first predefined threshold;
- when the difference between the first average value and the second average value is greater than or equal to the first predefined threshold, determine a frequency correction value based on the first average value and the second average value;
- determine frequency correction setpoints according to the frequency correction value taking into account stability metrics of the islanded power grid; and
- send the frequency correction setpoints to converters of the plurality of energy sources for realisation,

wherein the iterative execution of the frequency correction process terminates upon matching of the frequency of the islanded power grid with the frequency of the main power grid.

In this regard, a technical effect of determining average values of the frequency values in a given phasor data (namely, the first phasor data and/or the second phasor data), is to minimise any noise or outlier. The first average value and the second average value are calculated as given by:

$$\overline{f_g} = \frac{1}{N_{fw}}\sum\nolimits_{k=1}^{N_{fw}} f_g^k \qquad (1)$$

$$\overline{f_\iota} = \frac{1}{N_{fw}}\sum\nolimits_{k=1}^{N_{fw}} f_i^k \qquad (2)$$

wherein, $\overline{f_g}$ denotes the first average value of the frequency values in the first phasor data, $\overline{f_l}$ denotes the second average value of the frequency values in the second phasor data, $N_{fw}$ denotes the number of samples of a frequency-averaging window for determining $\overline{f_g}$ and $\overline{f_l}$, $f_g^k$ denotes a frequency associated with the first phasor data at a time instant k, and $f_i^k$ denotes a frequency associated with the second phasor data at the time instant k. Beneficially, the frequency correction process dynamically adjusts a length of the first phasor data and the second phasor data, to capture different dynamics of the main power grid and the islanded power grid, respectively, and enable faster or slower synchronisation of the islanded power grid with the main power grid.

Subsequently, a difference ($\Delta f$) between first average value and the second average value is determined. In other words, a frequency deviation between first average value and the second average value is determined,

$$\Delta f = (\overline{f_g} - \overline{f_i}) \qquad (3)$$

In this regard, when the difference ($\Delta f$) between first average value and the second average value is positive, it means that an under-frequency (UF) condition exists at the power island. Alternatively, when the difference ($\Delta f$) between first average value and the second average value is negative, it means that an over-frequency (OF) condition exists at the power island. The difference ($\Delta f$) between first average value and the second average value can be any one of: greater than or equal to, less than the first predefined threshold. Herein, the first predefined threshold could be specified by the operator, depending upon current condition of the islanded power grid and the main power grid.

When the difference ($\Delta f$) between the first average value and the second average value is greater than or equal to than the first predefined threshold, then the frequency correction process will iteratively correct the frequency of the islanded power grid to match the frequency of the main power grid. Alternatively, difference ($\Delta f$) between the first average value and the second average value is less than the first predefined threshold, then the frequency correction process will terminate and the phase and voltage magnitude correction process (as will be described later) will be initiated. Herein, the first predefined threshold can be based on a grid code of a country in which the islanded power grid and the main power grid reside, and/or a control setting of each of the plurality of energy sources.

Subsequently, in order to correct the frequency values in the second phasor data according to the frequency values in the first phasor data, the frequency correction value $\omega_{corr}$ is determined, wherein the frequency correction value $\omega_{corr}$ is converted to radian per second (rad/s), as given by,

$$\omega_{corr} = (\overline{f_g} - \overline{f_i})2\pi \qquad (4)$$

wherein, $k_f$ denotes an integration constant which is used to smoothen the frequency correction value $\omega_{corr}$ The term *"smoothing"* here refers to process of reducing the noise and fluctuations.

Subsequently, the frequency correction setpoints are determined in time domain by taking into account stability metrics of the islanded power grid.

$$\omega_{corr}^*(t) \propto \omega_{corr} : k_f(t), \ \{S(t)\} \qquad (5)$$

wherein, $k_f(t)$ denotes compensating filter functions which are used to smoothen the frequency correction values $\omega_{corr}$ and $\{S(t)\}$ denotes a set of stability metrics used to maintain the stability of the power island during synchronisation.

Herein, the term *"stability metrics"* refers to quantitative measures used to evaluate an ability of the islanded power grid to maintain its steady-state operating conditions and recover from disturbances or disruptions incurred while synchronising the islanded power grid with the main power grid. The stability metrics of the islanded power grid may include at least one of: a frequency stability metric, a voltage stability metric, a transient stability metric, a small signal stability metric.

Thereafter, the frequency correction setpoints are sent to the converters of the plurality of energy sources to adjust the frequency of the islanded power grid in an incremental manner, so as to approach the frequency of the main power grid. In this regard, positive frequency correction setpoints are sent to introduce a positive offset to the frequency of the converters of the plurality of energy sources in UF condition, and negative frequency correction setpoints are sent to introduce a negative offset to the frequency of the converters of the plurality of energy source in OF condition. With every frequency correction setpoint sent to the converters of the plurality of energy sources, the difference between the first average value and the second average value decreases, such that at a particular time instant, the difference between the first average value and the second average value is less than the first predefined threshold. The term *"converters"* refer to devices or systems convert the electrical energy generated by the plurality of energy sources into a form that can be used by the islanded power grid. In an embodiment, when the frequency correction process terminates upon matching of the frequency of the islanded power grid with the frequency of the main power grid, the phase control process is executed. In another embodiment, when the frequency of the islanded power grid does not match with the frequency of the main power grid, the frequency correction process repeats.

Optionally, at each iteration, the main controller is further configured to:

- determine a first confidence value indicative of a reliability of the frequency values in the first phasor data;
- determine a second confidence value indicative of a reliability of the frequency values in the second phasor data;
- determine an overall frequency confidence value as a product of the first confidence value and the second confidence value; and
- determine whether the overall frequency confidence value is greater than or equal to a second predefined threshold,

wherein when the overall frequency confidence value is greater than or equal to the second predefined threshold, the frequency correction value is determined.

In this regard, the first confidence value and the second confidence value are used to account for a reliability of the frequency values in the first phasor data and the second phasor data, respectively, within $N_{fw}$. Moreover, the first confidence value and the second confidence value are represented in percentage. The first confidence value and the second confidence value are calculated as shown,

$$CL_{fg} = \frac{N_{hfg}}{N_{fw}} |F_g| \cdot 100\% \qquad (6)$$

$$CL_{fi} = \frac{N_{hfi}}{N_{fw}} |F_i| \cdot 100\% \qquad (7)$$

wherein $CL_{fg}$ denotes the first confidence value, $N_{hfg}$ denotes the number of healthy samples of frequency calculations of the main power grid, $CL_{fi}$ denotes the second confidence value, and $N_{hfi}$ denotes the number of healthy samples of frequency calculations of the islanded power grid.

Subsequently, the overall frequency confidence value, in other words, a total confidence level for frequency control, is calculated, as given by,

$$CL_f = CL_{fg} \cdot CL_{fi} \qquad (8)$$

wherein, $CL_f$ denotes the overall frequency confidence value.

Subsequently, upon calculation of the overall frequency confidence value, when the overall frequency confidence value exceeds or is equal to the second predefined threshold, the frequency correction setpoints are sent to the converters of the plurality of energy sources to determine the frequency correction value. A technical effect of determining the confidence values prior to determining the frequency correction value is that the frequency correction values will be sent to the relevant converters only when all the relevant frequency calculations have been recorded from a reliable set of the first phasor data and the second phasor data. As an example, the second predefined threshold may lie in a range of 90 percent of total confidence value to 100 percent of the total confidence value.

Optionally, when determining the frequency correction setpoints according to the frequency correction value, the main controller is configured to:

- determine tentative frequency correction setpoints for the converters of the plurality of energy sources, according to the frequency correction value; and

- process the tentative frequency correction setpoints using compensation filter functions and stability metrics, to produce the frequency correction setpoints.

In this regard, the tentative frequency correction setpoints are intermediate correction setpoints which are sent to the converters of the plurality of energy sources, to adjust the frequency of the islanded power grid to match the frequency of the main power grid. Herein, initial values of the tentative frequency correction setpoints are estimated based on the frequency of the islanded power grid and past values of the tentative frequency correction setpoints.

The phase and voltage magnitude correction process is executed after termination of the frequency correction process to initiate a process of stabilising the phase of the islanded power grid according to the phase of the main power grid, for synchronising the islanded power grid to the main power grid, by using the phase and voltage magnitude values in the first phasor data as reference phase values. The phase and voltage magnitude correction process is performed in an iterative manner, i.e., in a repetitive sequence of steps until the frequency of the islanded power grid matches with the frequency of the main power grid. A technical effect of executing the phase and voltage magnitude correction process iteratively is that the phase of the islanded power grid is modified or adjusted repeatedly to approach the phase of the main power grid in a step-by-step manner.

Optionally, a given time-stamped voltage phasor comprises at least a phase value, and when executing the phase and voltage magnitude correction process iteratively, at each iteration, the main controller is configured to:

- determine a third average value of phase values in the first phasor data and a fourth average value of voltage magnitude values in the first phasor data;
- determine a fifth average value of phase values in the second phasor data and a sixth average value of voltage magnitude values in the second phasor data;
- determine a phase correction value based on the third average value and the fifth average value and a voltage magnitude correction value based on the fourth average value and the sixth average value;
- determine phase and voltage magnitude correction setpoints according to the phase and voltage magnitude correction values taking into account stability metrics of the islanded power grid; and
- send the phase and voltage magnitude correction setpoints to the converters of the plurality of energy sources for realisation,

wherein the iterative execution of the phase and voltage magnitude correction process terminates upon matching of the phase and voltage magnitude of the islanded power grid at the connection point with the phase and voltage magnitudes of the main power grid.

The third average value and the fourth average value are calculated as given by:

$$\vec{V_g} = \begin{cases} \overline{\phi_g} = \frac{1}{N_{\phi w}} \sum_{k=1}^{N_{\phi w}} \phi_g^k \\ \overline{v_g} = \frac{1}{N_{vw}} \sum_{k=1}^{N_{vw}} v_g^k \end{cases} \qquad (9)$$

$$\vec{V_i} = \begin{cases} \overline{\phi_i} = \frac{1}{N_{\phi w}} \sum_{k=1}^{N_{\phi w}} \phi_i^k \\ \overline{v_i} = \frac{1}{N_{vw}} \sum_{k=1}^{N_{vw}} v_i^k \end{cases} \qquad (10)$$

wherein $\overline{\phi_g}$ denotes the third average value of the phase values in the first phasor data, $\overline{v_g}$ denotes the fourth average value of the voltage magnitude values in the first phasor data, $N_{vw}$ denotes number of samples of voltage-measuring window, $N_{\phi w}$ denotes number of samples of angle-measuring window, $v_g^k$ represents a voltage magnitude value associated with the first phasor data at the time instant $k$, $\phi_g^k$ represents a phase value associated with the first phasor data at the time instant k, $\overline{\phi_i}$ denotes the fifth average value of the phase values in the second phasor data, $\overline{v_i}$ denotes the sixth average value of the voltage magnitude values in the second phasor data, $v_i^k$ represents a voltage magnitude value associated with the second phasor data at the time instant k, and $\phi_i^k$ represents a phase value associated with the second phasor data at the time instant $k$. Then, the phase correction value ($\theta_{diff}$) is determined which is a difference between the third average value and the fifth average value, and the voltage magnitude correction value ($v_{diff}$) which is a difference between the fourth average value and the sixth average value is determined which is given by,

$$\theta_{diff} = \left(\overline{\phi_g} - \overline{\phi_i}\right) \quad (11\text{A})$$

$$v_{diff} = \left(\overline{v_g} - \overline{v_i}\right) \quad (11\text{B})$$

Subsequently, the phase and voltage magnitude correction setpoints are determined in time domain by taking into account the stability metrics of the islanded power grid, as explained earlier, wherein the phase and voltage magnitude correction setpoints are collected as given by,

$$\vec{V}_{corr}^{*}(t) = \begin{cases} \theta_{corr}^{*}(t) \propto \theta_{diff} : k_{\phi}(t), \ \{S(t)\} \\ v_{corr}^{*}(t) \propto v_{diff} : \ k_{v}(t), \ \{S(t)\} \end{cases} \quad (12)$$

wherein $k_v(t)$ denotes compensating filter functions which are used to smoothen the voltage magnitude values, $k_{\phi}(t)$ denotes compensating filter functions which are used to smoothen the phase values, and $\{S(t)\}$ denotes a set of stability metrics used to maintain the stability of the power island during synchronisation.

Thereafter, the phase and voltage magnitude correction setpoints are sent to the converters of the plurality of energy sources to adjust the phase and voltage magnitude of the islanded power grid at the connection point, in an incremental manner, so as to approach the phase and voltage magnitude of the main power grid. In this regard, the phase and voltage magnitude correction setpoints either advances or delays the phase and voltage correction value, thereby rotating the time-stamped voltage phasor in the second phasor data. With every phase and voltage magnitude correction setpoint sent to the converters of the plurality of energy sources, the difference between the third average value and the fourth average value decreases, such that at a particular time instant, the difference between the first average value and the second average value ideally approaches zero. In an embodiment, when the phase and voltage magnitude correction process terminates upon matching of the phase and voltage magnitude of the islanded power grid at the connection point with the phase and voltage magnitude of the main power grid, the phase and voltage magnitude control process is terminated after achieving synchronism between the islanded power grid and the main power grid. In another embodiment, when the phase and voltage magnitude of the islanded power grid does not match with the phase and voltage magnitude of the main power grid, the phase and the voltage magnitude correction process repeats.

Optionally, at each iteration, the main controller is further configured to:

- determine a third confidence value indicative of a reliability of the phase values in the first phasor data and a fourth confidence value indicative of a reliability of the voltage magnitude values in the first phasor data;
- determine a fifth confidence value indicative of a reliability of the phase values in the second phasor data and a sixth confidence value indicative of a reliability of the voltage magnitude values in the second phasor data;
- determine an overall phase confidence value at the connection point as a product of the third confidence value and the fifth confidence value, and determine an overall voltage magnitude at the connection point as a product of the fourth confidence value and the sixth confidence value; and
- determine whether the overall phase confidence value and the overall voltage magnitude confidence value is greater than or equal to a third predefined threshold,

wherein when the overall phase confidence value and the overall voltage magnitude confidence value is greater than or equal to the third predefined threshold, the phase and voltage magnitude correction values are determined.

In this regard, a given confidence value (namely, the third confidence value, the fourth confidence value, the fifth confidence value, and/or the sixth confidence value) are used to account for a reliability of the phase and voltage magnitude values in the first phasor data and the second phasor data, respectively, within $N_{\phi w}$. Moreover, the given confidence value is represented as a percentage. The third confidence value, the fourth confidence value, the fifth confidence value, and the sixth confidence value are calculated as shown,

$$CL_{\phi_g} = \frac{N_{h\phi g}}{N_{\phi w}} \cdot 100\% \quad (13\text{A})$$

$$CL_{v_g} = \frac{N_{hvg}}{N_{vw}} \cdot 100\% \qquad (13B)$$

$$CL_{\phi_i} = \frac{N_{h\phi i}}{N_{\phi w}} \cdot 100\% \qquad (14A)$$

$$CL_{v_i} = \frac{N_{hvi}}{N_{vw}} \cdot 100\% \qquad (14B)$$

wherein $CL_{\phi_g}$ denotes the third confidence value associated with the phase of the main power grid, $CL_{v_g}$ denotes the fourth confidence value associated with the voltage magnitude of the main power grid, , $CL_{\phi_i}$ denotes the fifth confidence value associated with the phase of the islanded power grid, $CL_{v_i}$ denotes the sixth confidence value associated with the voltage magnitude of the islanded power grid, $N_{hvg}$ denotes the number of healthy samples of voltage magnitude calculations of the main power grid, $N_{h\phi g}$ denotes the number of healthy samples of phase calculations of the main power grid, $N_{hvi}$ denotes the number of healthy samples of voltage magnitude calculations of the islanded power grid, $N_{h\phi i}$ denotes the number of healthy samples of phase calculations of the islanded power grid.

Subsequently, in other words, a total confidence level for phase and voltage magnitude control is calculated, as given by,

$$CL_\phi = CL_{\phi_g} \cdot CL_{\phi_i} \qquad (15A)$$

$$CL_v = CL_{v_g} \cdot CL_{v_i} \qquad (15B)$$

wherein $CL_\phi$ denotes the overall phase confidence value, and $CL_v$ denotes the overall voltage magnitude confidence value.

Subsequently, upon calculation of the phase and voltage magnitude confidence values, when the overall phase confidence value exceeds or is equal to the third predefined threshold, the phase and voltage magnitude correction setpoints are sent to the converters of the plurality of energy sources to determine the phase correction value. As an example, the third predefined threshold may lie in a range of 90 percent of total confidence value to 100 percent of the total confidence value.

Optionally, when determining the phase and voltage magnitude correction setpoints according to the phase correction value and the voltage magnitude correction value, the main controller is configured to:

- determine tentative phase and voltage magnitude correction setpoints for the converters of the plurality of energy sources, according to the phase correction value and the voltage magnitude correction value; and
- process the tentative phase and voltage magnitude correction setpoints using compensation filter functions and stability metrics, to produce the phase and voltage magnitude correction setpoints.

In this regard, the tentative phase and voltage magnitude correction setpoints are intermediate correction setpoints which are sent to the converters of the plurality of energy sources in an incremental manner, to adjust the phase and voltage magnitude of the islanded power grid at the connection point, to match the phase and voltage magnitude of the main power grid.

The activation signal is sent from the main controller of the islanded power grid to at least the electrical element upon termination of the phase correction process, to trigger at least the electrical element to initiate the electrical connection between the islanded power grid and the main power grid. In other words, the activation signal serves as a signal for the electrical element to turn on and make the electrical connection between the islanded power grid and the main power grid possible. Hence, this enables the islanded power grid to operate in synchronism with the main power grid in a parallel manner. The islanded power grid is able to exchange energy with the main power grid. Examples of the activation signal may include, a voltage signal, a current signal, a digital signal.

Optionally, the main controller is configured to also send the activation signal to the device associated with the operator of the system.

Optionally, the electrical element is at least one of: a circuit breaker, a relay, a switch. The term *"circuit breaker"* refers to a device that interrupts a flow of electricity upon receiving the activation signal from the main controller. The term *"relay"* refers to an electrical switch operated by an electromagnet, wherein the relay can close or open the connection point electronically as well as electromechanically. The term *"switch"* refers to a device that can establish the electrical connection by switching on or switching off by manually opening or closing a set of contacts.

Optionally, when determining the phase and voltage magnitude correction value, the main controller is further configured to:

- employ an artificial intelligence (AI)-based software application for identifying whether there exists any electrical device or operating condition that introduces a phase and voltage magnitude deviation, in any of the plurality of electric nodes including the plurality of energy sources in the islanded power grid;
- when it is determined that there exists an electrical device or operating condition that introduces the phase and voltage magnitude deviation in any of the plurality of electrical paths, determine a value of the phase and voltage magnitude deviation; and
- update the phase correction value and the voltage magnitude correction value that is determined using the third average value, the fourth average value, the fifth average value, and the sixth average value, by using information from phase and voltage magnitude deviation value.

Herein, a technical effect of employing the AI-based software application is that said AI-based software application can be trained to identifying existence of any electrical device or operating condition that introduces a phase and voltage magnitude deviation and update the phase and voltage magnitude correction value automatically upon completion of said training, wherein the AI-based software application can be generalised to identify electrical device or operating condition in new electric grids. Optionally, in this regard, the main controller is further configured to train the AI-based software application for identifying any electrical device or operating condition that introduces a phase and voltage magnitude deviation, using supervised learning. In this regard, the AI-based software application may previously be untrained or partially-trained, prior to said training. Optionally, when training the AI-based software application, the main controller is configured to: generate a training dataset, wherein the training dataset comprises electrical devices or operating conditions of the islanded power grid and the main power grid; and infer a function based on the training dataset. This function can optionally be applied to existing power grids (i.e., the islanded power grid and the main power grid) to simulate any electrical device or operating condition in any of the plurality of electrical nodes between the plurality of energy sources in the islanded power grid and the connection point.

Herein, the term *"phase deviation"* refers to any phase emanating from at least the electrical element and/or the operating condition. As an example, a phase deviation may emanate from a vector group of a transformer in any of the islanded power grid or the main power grid, or a load which is not known or monitored in the system. Hence, the values of the phase and voltage magnitude deviation $v_{AI}(t)$ and $\theta_{AI}(t)$ are determined. Consequently, equation (12) is updated upon determination of the value of the phase deviation $v_{AI}(t)$ and $\theta_{AI}(t)$ becomes,

$$\vec{V}_{corr}^{*}(t) = \begin{cases} v_{corr}^{*}(t) + v_{AI}(t) \\ \theta_{corr}^{*}(t) + \theta_{AI}(t) \end{cases} \qquad (16)$$

Hence, the AI-based software application beneficially compensates for a lack of measuring points in the islanded power grid.

Optionally, a given PMU comprises a PMU-based controller, the PMU-based controller being configured to:

- receive information indicative of a plurality of timing sources in the islanded power grid and the main power grid;
- determine an efficiency of each of the plurality of timing sources, based on a plurality of metrics associated with each of the plurality of timing sources; and
- select a timing source having a highest efficiency amongst the plurality of timing sources as a timing reference.

In this regard, beneficially, reliable and stable timestamps are generated by the PMU-based controller. A technical effect of generating the timestamps is that it enables time-synchronisation of all devices in the main power grid and in the islanded power grid.

Herein, the term *"timing source"* refers to a device or a system that provides precise time information. Hence, the information indicative of the plurality of timing sources comprises timing information in a numeric form, or in an alphanumeric form. An example of the timing information in numeric form may be 04:06:11. An example of the timing information in alphanumeric form may be, 4:06 am. In an embodiment, a timing source from amongst the plurality of timing sources has same information as another timing source from amongst the plurality of timing sources. In another embodiment, a timing source from amongst the plurality of timing sources has different information as another timing source from amongst the plurality of timing sources. Notably, the plurality of the timing sources is capable and flexible to switch among software-based timing sources and hardware-based timing sources. Examples of such software-based timing sources may include, but are not limited to, GPS time, a network time protocol (NTP), a system clock, a virtual machine time sync. Examples of such hardware-based timing sources may include, but are not limited to, an atomic clock, a GPS receiver, an NTP server, a quartz crystal oscillator.

Subsequently, the determination of the efficiency of each of the plurality of timing sources is based on stability and accuracy of each of the plurality of timing sources. The efficiency is determined using weighted variance calculations over time to estimate short-term stability and long-term stability of each of the plurality of timing sources. Optionally, a statistical model is used to estimate an accuracy of each of the plurality of timing sources which takes into account noise and errors during measurement and use information to make an accurate estimate of a performance of each of the plurality of timing sources. The statistical model optionally calculates a likelihood of each of the plurality of timing sources to produce corrupted timing information. Subsequently, the plurality of metrics associated with each of the plurality of timing sources comprises at least one of: a time variance, a frequency stability, a phase stability, an accessibility of the timing source. Based on the plurality of metrics, each of the plurality of timing sources are assigned a score. Finally, a vote-based technique is used to select the timing source having the highest efficiency amongst the plurality of timing sources, based on a highest score amongst the plurality of metrics. A technical effect of synchronising the PMU-based controller on the most efficient timing source is that the given phasor data collected using a given PMU (namely, at least one first PMU and/or a plurality of PMUs) is accurate and reliable in nature.

Optionally, the system further comprises a data repository communicably coupled to the main controller, wherein the main controller is configured to store, at the data repository, at least one of: network parameters of the main power grid, network parameters of the islanded power grid, network parameters of devices in the islanded power grid, synchronisation criteria of the islanded power grid and the main power grid. Herein, the term *"data repository"* refers to hardware, software, firmware, or a combination of these for storing at least one of: the network parameters of the main power grid, the network parameters of the islanded power grid, the network parameters of devices in the islanded power grid, the synchronisation criteria of the islanded power grid and the main power grid. It will be appreciated that the data repository could be implemented as a cloud-based memory, a memory of the main controller, a memory of the PMU-based controller, a memory of the device, a local memory of the plurality of second PMUs, a removable memory, or similar. The network parameters of the main power grid comprises at least one of: a voltage value, a current value, a phase-slip, a frequency. The network parameters of the islanded power grid comprise at least one of: a voltage level, a load rated capacity, an impedance value of the electrical path, a length of the electrical path. The network parameters devices in the islanded power grid comprise at least one of: a rated AC-side voltage, a rated direct current (DC)-side voltage, a voltage droop setting, a frequency droop setting, a battery capacity, an AC-side filter. The synchronization criteria of the islanded power grid and the main power grid is at least one of: a frequency slip, a phase, a voltage magnitude difference. Optionally, the main controller is also configured to store, at the data repository, at least one of: historical records of the first phasor data, historical records of the second phasor data.

The present disclosure also relates to the method. Various embodiments and variants disclosed above, with respect to the aforementioned system, apply *mutatis mutandis* to the method.

Optionally, the step of executing the frequency correction process iteratively, at each iteration, comprises:

- determining a first average value of the frequency values in the first phasor data;
- determining a second average value of the frequency values in the second phasor data;
- determining whether a difference between the first average value and the second average value is greater than or equal to a first predefined threshold;
- when the difference between the first average value and the second average value is greater than or equal to the first predefined threshold, determining a frequency correction value based on the first average value and the second average value;
- determining frequency correction setpoints according to the frequency correction value taking into account stability metrics of the islanded power grid; and
- sending the frequency correction setpoints to converters of the plurality of energy sources for realisation,

wherein the iterative execution of the frequency correction process terminates upon matching of the frequency of the islanded power grid with the frequency of the main power grid.

Optionally, a given time-stamped voltage phasor comprises at least a phase and voltage magnitude value, and the step of executing the phase and voltage magnitude correction process iteratively, at each iteration, comprises:

- determining a third average value of phase values in the first phasor data and a fourth average value of voltage magnitude values in the first phasor data;
- determining a fifth average value of phase values in the second phasor data and a sixth average value of voltage magnitude values in the second phasor data;

- determining a phase correction value based on the third average value and the fifth average value and a voltage magnitude correction value based on the fourth average value and the sixth average value;
- determining phase and voltage magnitude correction setpoints according to the phase and voltage magnitude correction value taking into account stability metrics of the islanded power grid; and
- sending the phase and voltage magnitude correction setpoints to the converters of the plurality of energy sources for realisation,

wherein the iterative execution of the phase and voltage magnitude correction process terminates upon matching of the phase and voltage magnitude of the islanded power grid at the connections point with the phase and voltage magnitude of the main power grid.

DETAILED DESCRIPTION OF THE DRAWINGS

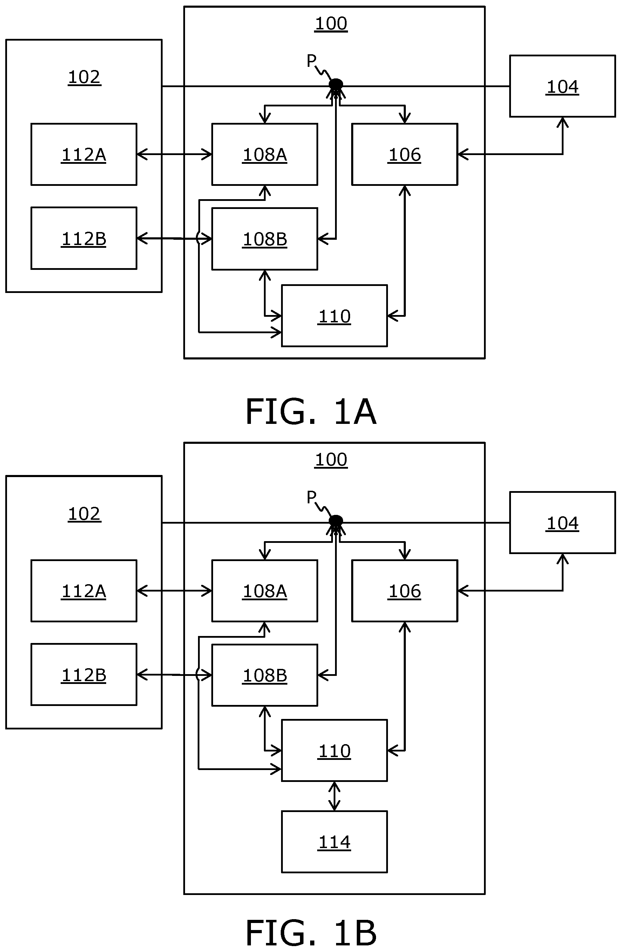

Referring to FIGs. 1A and 1B, illustrated are block diagrams of example architectures of a system **100** for synchronising an islanded power grid **102** with a main power grid **104,** in accordance with an embodiment of the present disclosure. In FIGs. 1A and 1B, the system **100** comprises at least one first phasor measurement unit (PMU) (depicted as a first PMU **106),** a plurality of second PMUs (depicted as two second PMUs **108A** and **108B),** and a main controller **110.** The first PMU **106** when in use, collects first phasor data associated with the main power grid **104.** Herein, the first PMU **106** is electrically coupled to an electrical path between the main power grid **104** and a connection point **P** between the islanded power grid **102** and the main power grid **104.** The two second PMUs **108A-B** when in use, collect second phasor data associated with the islanded power grid **102.** Herein, the two second PMUs **108A-B** are electrically coupled to a plurality of electrical paths between a plurality of energy sources (depicted as two energy sources **112A** and **112B)** in the islanded power grid **102** and the connection point **P.** The main controller **110** of the islanded power grid **102** is communicably coupled to the first PMU **106** and the second PMU **108B** (i.e., the main controller **110** is communicably coupled to at least one of the two second PMUS **108A-B).** In FIG. 1B, optionally, the main controller **110** is communicably coupled to at least one data repository (depicted as a data repository **114).**

It may be understood by a person skilled in the art that the FIGs. 1A and 1B includes an architecture of the system **100** for sake of clarity, which should not unduly limit the scope of the claims herein. It is to be understood that the specific implementations of the system **100** are provided as examples and are not to be construed as limiting it to specific numbers or types of first phasor measurement units, second phasor measurement units, and main controllers. The person skilled in the art will recognize many variations, alternatives, and modifications of embodiments of the present disclosure.

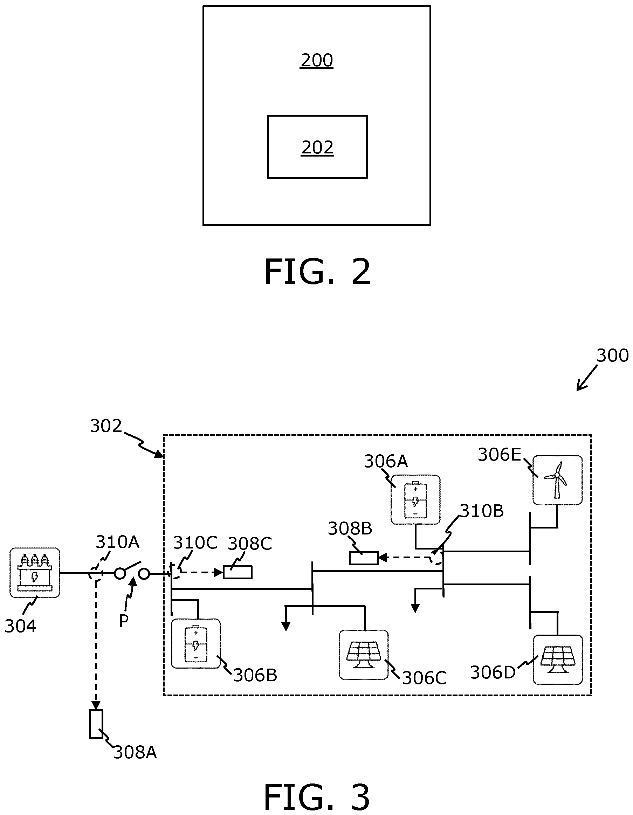

Referring to FIG. 2, illustrated is a block diagram of an exemplary phasor measurement unit (PMU) **200,** in accordance with an embodiment of the present disclosure. The PMU **200** comprises a PMU-based controller **202.**

FIG. 2 is merely an example, which should not unduly limit the scope of the claims herein. A person skilled in the art will recognize many variations, alternatives, and modifications of embodiments of the present disclosure.

Referring to FIG. 3, illustrated is an exemplary system **300** for synchronising an islanded power grid **302** with a main power grid **304,** in accordance with an embodiment of the present disclosure. The islanded power grid **302** comprises two battery energy storage systems **306A** and **306B,** two solar photovoltaic energy sources **306C** and **306D,** and a wind energy source **306E.** A first phasor measurement unit (PMU) **308A** is connected in an electrical node **310A** at the main power grid **304** close to a connection point **P.** A plurality of second PMUs (i.e., two second PMUs **308B** and **308C)** are connected at a plurality of electric nodes (i.e., two electric nodes **310B** and **310C)** which at least includes plurality of energy sources **406A-E** in the islanded power grid **402.** When the system **300** is in use, the first PMU **308A** collects first phasor data, and the two second PMUs **308B-C** collect second phasor data. A main controller (not shown) of the islanded power grid **302** receives the first phasor data and the second phasor data. Upon receiving a command from a device (not shown) associated with an operator of the system **300,** the main controller proceeds to a frequency correction process. The frequency correction process is executed in an iterative manner. When a frequency of the islanded power grid **302** matches to a frequency of the main power grid **304,** the frequency correction process terminates. The main controller then proceeds to a phase and voltage magnitude correction process, wherein the phase and voltage magnitude correction process is executed in an iterative manner. When a phase and voltage magnitude of the islanded power grid **302** close to the connection point **P** (i.e., the electrical node **310C)** matches to a phase and voltage magnitude of the main power grid **304,** the phase and voltage magnitude correction process terminates. Finally, an activation signal is sent to at least an electrical element arranged at the connection point **P,** causing the electrical element to establish an electrical connection between the islanded power grid **302** and the main power grid **304** upon receiving the activation signal.

FIG. 3 is merely an example, which should not unduly limit the scope of the claims herein. A person skilled in the art will recognize many variations, alternatives, and modifications of embodiments of the present disclosure.

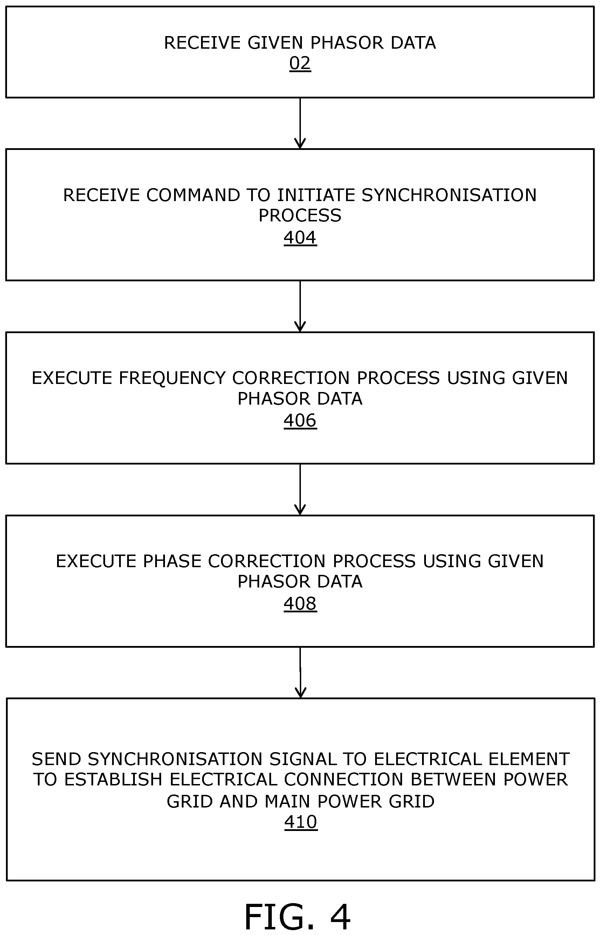

Referring to FIG. 4, illustrated is a flowchart depicting steps of a method for synchronising an islanded power grid with a main power grid, in accordance with an embodiment of the present disclosure. At step **402,** first phasor data is received from at least one phase measurement unit (PMU) and second phasor data is received from a plurality of second PMUs. Herein, the first phasor data comprises time-stamped voltage phasors and frequency values at an electrical node within main power grid close to a connection point, and the second phasor data comprises time-stamped voltage phasors and frequency values at a plurality of electric nodes which at least includes a plurality of energy sources in the islanded power grid. At step **404,** a command is received from a device associated with an operator of the system, wherein upon receiving said command, the main controller initiates the entire synchronisation process starting with a frequency correction process. At step **406,** the frequency correction process is executed iteratively using the first phasor data and the second phasor data, for matching a frequency of the islanded power grid to a frequency of the main power grid. At step **408,** a phase and voltage magnitude correction process is executed iteratively using the first phasor data and the second phasor data, for matching the phase and voltage magnitude of the islanded power grid at the connection point with the phase of the main power grid. At step **410,** an activation signal is sent to at least an electrical element arranged at the connection point, causing the electrical element to establish an electrical connection between the islanded power grid and the main power grid upon receiving the activation signal.

The aforementioned steps are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

**Claims**

1.    A system for synchronising an islanded power grid with a main power grid, the system comprising:

- at least one first phasor measurement unit (PMU) that in use, collects first phasor data associated with the main power grid, wherein the first phasor data comprises time-stamped voltage phasors and frequency values at an electrical node within main power grid close to a connection point;
- a plurality of second PMUs that in use, collect second phasor data associated with the islanded power grid, wherein the second phasor data comprises time-stamped voltage phasors and frequency values at a plurality of electric nodes which at least include a plurality of energy sources in the islanded power grid;
- a main controller of the islanded power grid that is communicably coupled to the at least one first PMU and at least one of the plurality of second PMUs, the main controller being configured to:

- receive the first phasor data and the second phasor data;
- receive a command from a device associated with an operator of the system; and then
- execute the frequency correction process iteratively using the first phasor data and the second phasor data, to match a frequency of the islanded power grid to a frequency of the main power grid;
- execute a phase and voltage magnitude correction process iteratively using the first phasor data and the second phasor data, to match a phase and voltage magnitude of the islanded power grid at the connection point to a phase and voltage magnitude of the main power grid; and
- send an activation signal to at least an electrical element arranged at the connection point, causing the electrical element to establish an electrical connection between the islanded power grid and the main power grid upon receiving the activation signal.

2.    A system of claim 1, wherein when executing the frequency correction process iteratively, at each iteration, the main controller is configured to:

- determine a first average value of the frequency values in the first phasor data;
- determine a second average value of the frequency values in the second phasor data;
- determine whether a difference between the first average value and the second average value is greater than or equal to a first predefined threshold;
- when the difference between the first average value and the second average value is greater than or equal to the first predefined threshold, determine a frequency correction value based on the first average value and the second average value;
- determine frequency correction setpoints according to the frequency correction value taking into account stability metrics of the islanded power grid; and

- send the frequency correction setpoints to converters of the plurality of energy sources for realisation,

wherein the iterative execution of the frequency correction process terminates upon matching of the frequency of the islanded power grid with the frequency of the main power grid.

3. A system of claim 2, wherein at each iteration, the main controller is further configured to:

- determine a first confidence value indicative of a reliability of the frequency values in the first phasor data;
- determine a second confidence value indicative of a reliability of the frequency values in the second phasor data;
- determine an overall frequency confidence value as a product of the first confidence value and the second confidence value; and
- determine whether the overall frequency confidence value is greater than or equal to a second predefined threshold,

wherein when the overall frequency confidence value is greater than or equal to the second predefined threshold, the frequency correction value is determined.

4. A system of any of claim 2 or 3, wherein when determining the frequency correction setpoints according to the frequency correction value, the main controller is configured to:

- determine tentative frequency correction setpoints for the converters of the plurality of energy sources, according to the frequency correction value; and
- process the tentative frequency correction setpoints using compensation filter functions and stability metrics, to produce the frequency correction setpoints.

5. A system of any of the preceding claims, wherein a given time-stamped voltage phasor comprises at least a phase value, and when executing the phase correction process iteratively, at each iteration, the main controller is configured to:

- determine a third average value of phase values in the first phasor data and a fourth average value of voltage magnitude values in the first phasor data;
- determine a fifth average value of phase values in the second phasor data and a sixth average value of voltage magnitude values in the second phasor data;
- determine a phase correction value based on the third average value and the fifth average value and a voltage magnitude correction value based on the fourth average value and the sixth average value;
- determine phase and voltage magnitude correction setpoints according to the phase and voltage magnitude correction value taking into account stability metrics of the islanded power grid; and
- send the phase and voltage magnitude correction setpoints to the converters of the plurality of energy sources for realisation,

wherein the iterative execution of the phase and voltage magnitude correction process terminates upon matching of the phase and voltage magnitude of the islanded power grid at the connection point with the phase and voltage magnitude of the main power grid.

6. A system of claim 5, wherein at each iteration, the main controller is further configured to:

- determine a third confidence value indicative of a reliability of the phase values in the first phasor data and a fourth confidence value indicative of a reliability of the voltage magnitude values in the first phasor data;
- determine a fifth confidence value indicative of a reliability of the phase values in the second phasor data and a sixth confidence value indicative of a reliability of the voltage magnitude values in the second phasor data;
- determine an overall phase confidence value at the connection point as a product of the third confidence value and the fifth confidence value, and determine an overall voltage magnitude confidence value at the connection point as a product of the fourth confidence value and the sixth confidence value; and
- determine whether the overall phase confidence value and the overall voltage magnitude confidence value is greater than or equal to a third predefined threshold,

wherein when the overall phase confidence value and the overall voltage magnitude confidence value is greater than or equal to the third predefined threshold, the phase and voltage magnitude correction values are determined.

**7.** A system of any of claim 5 or 6, wherein when determining the phase and voltage magnitude correction setpoints according to the phase correction value and the voltage magnitude correction value, the main controller is configured to:

    - determine tentative phase and voltage magnitude correction setpoints for the converters of the plurality of energy sources, according to the phase and voltage magnitude correction value; and
    - process the tentative phase and voltage magnitude correction setpoints using compensation filter functions and stability metrics, to produce the phase and voltage magnitude correction setpoints.

**8.** A system of any of claims 5-7, wherein when determining the phase and voltage magnitude correction value, the main controller is further configured to:

    - employ an artificial intelligence (AI)-based software application for identifying whether there exists any electrical device or operating condition that introduces a phase and voltage magnitude deviation, in any of the plurality of electric nodes including the plurality of energy sources in the islanded power grid;
    - when it is determined that there exists an electrical device or operating condition that introduces the phase and voltage magnitude deviation in any of the plurality of electric nodes, determine a value of the phase and voltage magnitude deviation; and
    - update the phase and voltage magnitude correction value that is determined using the third average value, the fourth average value, the fifth average value, and the sixth average value, by using information from phase and voltage magnitude deviation value.

**9.** A system of any of the preceding claims, wherein a given PMU comprises a PMU-based controller, the PMU-based controller being configured to:

    - receive information indicative of a plurality of timing sources in the islanded power grid and the main power grid;
    - determine an efficiency of each of the plurality of timing sources, based on a plurality of metrics associated with each of the plurality of timing sources; and
    - select a timing source having a highest efficiency amongst the plurality of timing sources as a timing reference.

**10.** A system of any of the preceding claims, further comprising a data repository communicably coupled to the main controller, wherein the main controller is configured to store, at the data repository, at least one of: network parameters of the main power grid, network parameters of the islanded power grid, network parameters of devices in the islanded power grid, synchronisation criteria of the islanded power grid and the main power grid.

**11.** A system of any of the preceding claims, wherein the electrical element is at least one of: a circuit breaker, a relay, a switch.

**12.** A method for synchronising an islanded power grid with a main power grid, the method comprising:

    - receiving a first phasor data from at least one phase measurement unit (PMU) and a second phasor data from a plurality of second PMUs, wherein the first phasor data comprises time-stamped voltage phasors and frequency values at an electrical node within main power grid close to a connection point, and the second phasor data comprises time-stamped voltage phasors and frequency values at a plurality of electric nodes which at least include a plurality of energy sources in the islanded power grid;
    - receiving a command from a device associated with an operator of the system; and then
    - executing the frequency correction process iteratively using the first phasor data and the second phasor data, for matching a frequency of the islanded power grid to a frequency of the main power grid;
    - executing a phase and voltage magnitude correction process iteratively using the first phasor data and the second phasor data, for matching a phase and voltage magnitude of the islanded power grid at the connection point to a phase and voltage magnitude of the main power grid; and
    - sending an activation signal to at least an electrical element arranged at the connection point, causing the electrical element to establish an electrical connection between the islanded power grid and the main power grid upon receiving the activation signal.

**13.** A method of claim 12, wherein the step of executing the frequency correction process iteratively, at each iteration, comprises:

EP 4 528 967 A1

- determining a first average value of the frequency values in the first phasor data;
- determining a second average value of the frequency values in the second phasor data;
- determining whether a difference between the first average value and the second average value is greater than or equal to a first predefined threshold;
- when the difference between the first average value and the second average value is greater than or equal to the first predefined threshold, determining a frequency correction value based on the first average value and the second average value;
- determining frequency correction setpoints according to the frequency correction value taking into account stability metrics of the islanded power grid; and
- sending the frequency correction setpoints to converters of the plurality of energy sources for realisation,

wherein the iterative execution of the frequency correction process terminates upon matching of the frequency of the islanded power grid with the frequency of the main power grid.

14. A method of any of the claims 12-13, wherein a given time-stamped voltage phasor comprises at least a phase and voltage magnitude value, and the step of executing the phase and voltage magnitude correction process iteratively, at each iteration, comprises:

- determining a third average value of phase values in the first phasor data and a fourth average value of voltage magnitude values in the first phasor data;
- determining a fifth average value of phase values in the second phasor data and a sixth average value of voltage magnitude values, in the second phasor data;
- determining a phase correction value based on the third average value and the fifth average value and a voltage magnitude correction value based on the fourth average value and the sixth average value;
- determining phase and voltage magnitude correction setpoints according to the phase and voltage magnitude correction value taking into account stability metrics of the islanded power grid; and
- sending the phase and voltage magnitude correction setpoints to the converters of the plurality of energy sources for realisation,

wherein the iterative execution of the phase and voltage magnitude correction process terminates upon matching of the phase and voltage magnitude of the islanded power grid close to the connection point with the phase and voltage magnitude of the main power grid.

FIG. 1A

FIG. 1B

FIG. 2

FIG. 3

```
┌─────────────────────────────────────────────────────────┐
│                RECEIVE GIVEN PHASOR DATA                  │
│                          02                               │
└─────────────────────────────────────────────────────────┘
                            │
                            ▼
┌─────────────────────────────────────────────────────────┐
│       RECEIVE COMMAND TO INITIATE SYNCHRONISATION         │
│                       PROCESS                             │
│                         404                               │
└─────────────────────────────────────────────────────────┘
                            │
                            ▼
┌─────────────────────────────────────────────────────────┐
│     EXECUTE FREQUENCY CORRECTION PROCESS USING GIVEN      │
│                     PHASOR DATA                           │
│                         406                               │
└─────────────────────────────────────────────────────────┘
                            │
                            ▼
┌─────────────────────────────────────────────────────────┐
│       EXECUTE PHASE CORRECTION PROCESS USING GIVEN        │
│                     PHASOR DATA                           │
│                         408                               │
└─────────────────────────────────────────────────────────┘
                            │
                            ▼
┌─────────────────────────────────────────────────────────┐
│   SEND SYNCHRONISATION SIGNAL TO ELECTRICAL ELEMENT       │
│  TO ESTABLISH ELECTRICAL CONNECTION BETWEEN POWER         │
│           GRID AND MAIN POWER GRID                        │
│                         410                               │
└─────────────────────────────────────────────────────────┘
```

# FIG. 4

Europäisches
Patentamt

European
Patent Office

Office européen
des brevets

# EUROPEAN SEARCH REPORT

Application Number

EP 24 20 0794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/019768 A1 (FLETCHER JOHN EDWARD [AU] ET AL) 19 January 2023 (2023-01-19) | 1-4,9-13 | INV. H02J3/38 |
| A | * paragraphs [0001] - [0027], [0064], [0075], [0104], [0142]; figures 1-23 * | 5-8,14 | H02J3/40 |
| Y | CINTUGLU MEHMET H ET AL: "Microgrid automation assisted by synchrophasors", 2015 IEEE POWER & ENERGY SOCIETY INNOVATIVE SMART GRID TECHNOLOGIES CONFERENCE (ISGT), IEEE, 18 February 2015 (2015-02-18), pages 1-5, XP032787923, DOI: 10.1109/ISGT.2015.7131857 [retrieved on 2015-06-23] | 1-4,9-13 | |
| A | * page 1 - page 5 * | 5-8,14 | |
| A | ALMAS MUHAMMAD SHOAIB ET AL: "A Hybrid Synchrophasor and GOOSE-Based Power System Synchronization Scheme", IEEE ACCESS, vol. 4, 13 September 2016 (2016-09-13), pages 4659-4668, XP011622829, DOI: 10.1109/ACCESS.2016.2601445 [retrieved on 2016-09-13] * paragraphs [0003] - [0005] * | 1-14 | |
| A | HAZRA JAGABONDHU ET AL: "Stream computing based synchrophasor application for power grids", PROCEEDINGS OF THE 54TH ACM TECHNICAL SYMPOSIUM ON COMPUTER SCIENCE EDUCATION V. 2, ACMPUB27, NEW YORK, NY, USA, 13 November 2011 (2011-11-13), pages 43-50, XP059559244, DOI: 10.1145/2096123.2096134 ISBN: 978-1-4503-9433-8 * pages 1,2 * | 1-14 | |

TECHNICAL FIELDS
SEARCHED (IPC)

H02J

-/--

The present search report has been drawn up for all claims

| Place of search | Date of completion of the search | Examiner |
|---|---|---|
| Munich | 23 January 2025 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**Application Number**

EP 24 20 0794

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 9 800 055 B2 (SCHWEITZER ENGINEERING LAB INC [US]) 24 October 2017 (2017-10-24) * columns 1-4; figures 1-6 * ----- | 1-14 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 23 January 2025 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0794

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | Publication date | Patent family member(s) | | Publication date |
|---|---|---|---|---|
| US 2023019768 A1 | 19-01-2023 | AU | 2020404444 A1 | 30-06-2022 |
| | | EP | 4078758 A1 | 26-10-2022 |
| | | US | 2023019768 A1 | 19-01-2023 |
| | | WO | 2021119734 A1 | 24-06-2021 |
| US 9800055 B2 | 24-10-2017 | NONE | | |

EPO FORM P0459

For more details about this annex : see Official Journal of the European Patent Office, No. 12/82